# EUROPEAN PATENT SPECIFICATION

(11) **EP 3 035 593 B1**
(45) Date of publication and mention of the grant of the patent: **18.10.2017**
(21) Application number: 15196947.4
(22) Date of filing: 30.11.2015
(51) Int. Cl.: H04L 12/18, H04L 12/58, H04M 3/38

(54) **TRANSMISSION SYSTEM, MANAGEMENT SYSTEM, TERMINAL, METHOD OF TRANSMISSION AND PROGRAM**
ÜBERTRAGUNGSSYSTEM, VERWALTUNGSSYSTEM, ENDGERÄT, ÜBERTRAGUNGSVERFAHREN UND PROGRAMM
SYSTÈME DE TRANSMISSION, SYSTÈME DE GESTION, TERMINAL, PROCÉDÉ DE TRANSMISSION ET PROGRAMME

(30) Priority: 16.12.2014 JP 2014253606
(43) Date of publication of application: 22.06.2016
(73) Proprietor: Ricoh Company, Ltd., Tokyo 143-8555 (JP)
(72) Inventor: UCHIYAMA, Hiroaki, Tokyo, 143-8555 (JP)
(74) Representative: Schwabe - Sandmair - Marx

(56) References cited:
- WO-A1-2011/107814
- US-A1- 2005 249 209
- US-A1- 2011 219 060

## Description

### BACKGROUND OF THE INVENTION

### 1. Field of the Invention

The present disclosure relates to transmission systems, management systems, terminals, methods of transmission and programs.

### 2. Description of the Related Art

A remote conference system using conference terminals is known. In the remote conference system, images of a participant of a conference are captured and voice (sound) of the participant, etc., is collected in a conference room. The captured image or the collected sound are converted into digital data, and transmitted to the conference terminal of a counterpart. The image is displayed in a video screen, etc., and the sound is output from a speaker in a conference room of the counterpart, thereby simulating an actual conference.

In such a remote conference system, a list of destination addresses is displayed in the conference terminal so as to select a conference terminal of the counterpart to be connected to (see Patent Document 1).

However, for example, in a case where the conference terminal is used by a visitor who joins in the remote conference, or the conference room is rented to other parties, etc., the list of the destination addresses (destination address list) is to be seen by the other parties, etc., which may cause leakage of information regarding business connection, corporate organization, and the like. Also, even when the remote conference is for a private purpose (other than business), information regarding own group may leak.

### [RELATED ART DOCUMENT]

### [PATENT DOCUMENT]

[Patent Document 1]: Japanese Patent No. 5541092

WO2011107814 A1 discloses a method for obtaining buddy list data associated with buddies of a presentity in a communication network including the steps of storing, at a server, information associated with a plurality of users associated with the presentity as the buddy data, receiving, at the server, a request from a watcher for buddy data of the presentity, authorizing, at least in part by the server, the request for buddy data, and transmitting, by the server, the buddy information to the watcher.

### SUMMARY OF THE INVENTION

An object of disclosure of the present technology is to provide a technology for appropriately limiting display of the destination address list in accordance with a situation.

The following configuration is adopted to achieve the aforementioned object.

In one aspect of the embodiment, there is provided a transmission system comprising: a terminal; and a management system, wherein the terminal includes: an additional information acquiring unit configured to acquire additional information indicating a state of the terminal; a transmission unit configured to transmit terminal identification information and the additional information to the management system, wherein the terminal identification information is used for identifying the terminal; and a reception unit configured to receive a destination list from the management system, wherein a terminal identification information item for identifying another terminal is included in the destination list, the other terminal being selected by the management system as a communication destination of the terminal based on the terminal identification information of the terminal and the additional information, and wherein the management system includes: a reception unit configured to receive the terminal identification information and the additional information from the terminal; a destination list creation unit configured to select the other terminal as the communication destination of the terminal based on the terminal identification information of the terminal and the additional information to create the destination list including the terminal identification information item for identifying the selected other terminal; and a transmission unit configured to transmit the destination list to the terminal.

Other objects, features and advantages of the present invention will become more apparent from the following detailed description when read in conjunction with the accompanying drawings.

### BRIEF DESCRIPTION OF THE DRAWING

Fig. 1 is a schematic diagram for illustrating a transmission system of the present embodiment.
Fig. 2 is a block diagram for illustrating a hardware configuration of a terminal of the present embodiment.
Fig. 3 is a block diagram for illustrating a hardware configuration of a management system of the present embodiment.
Fig. 4 is a block diagram for illustrating the functional configurations of the terminal, the apparatus, and the system included in the transmission system of the present embodiment.
Fig. 5 is a diagram for illustrating an example destination list management table.
Fig. 6 is a diagram for illustrating an example terminal authentication management table.
Fig. 7 is a diagram for illustrating an example terminal management table.
Fig. 8 is a sequence diagram for schematically illustrating processes and operations of the present embodiment.
Fig. 9 is a sequence diagram for illustrating a process of the terminal for receiving a destination list from the management system to display the destination list.
Fig. 10 is a flowchart for illustrating a process for creating destination list request information.
Fig. 11 is a diagram for illustrating an example data structure of the destination list request information.
Fig. 12 is a flowchart for illustrating an example process for creating the destination list.
Fig. 13 is a diagram for illustrating an example screen for inputting a password.
Fig. 14 is a diagram for illustrating an example screen for inputting an IC card.
Fig. 15 is a diagram for illustrating an example destination list.
Fig. 16A is a diagram for illustrating an example display of the destination list in a case where the display of the destination list is not limited.
Fig. 16B is a diagram for illustrating an example display of the destination list in a case where a part of the destination terminals are not allowed to be displayed due to limiting conditions.

### DETAILED DESCRIPTION OF THE PREFERRED EMBODIMENTS

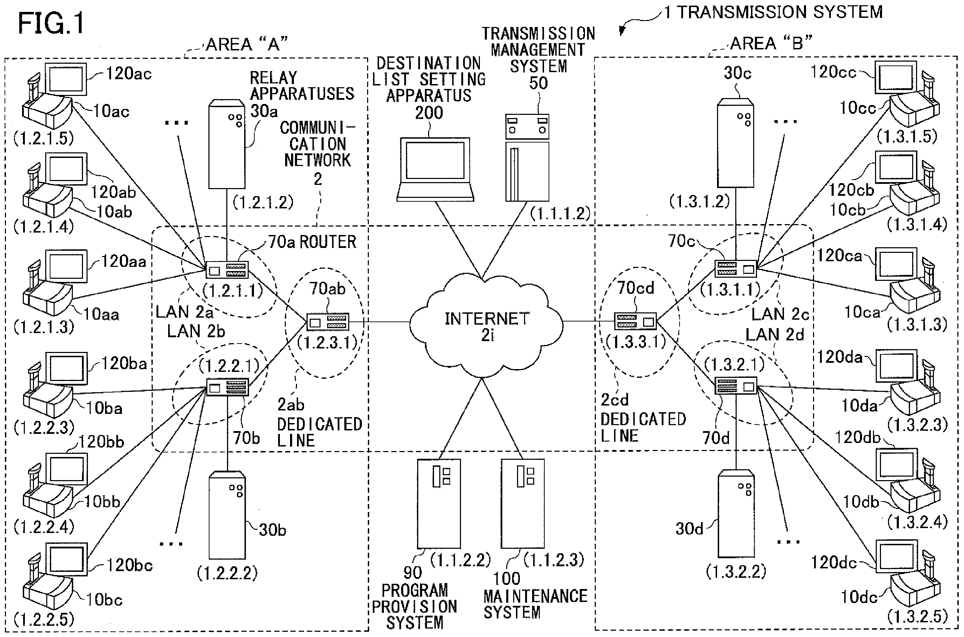

In the following, the present embodiment will be described with reference to Fig. 1 to Fig. 15. In the present embodiment, a desired destination address list is allowed to be displayed in a transmission terminal when convening a specific conference, or the transmission terminal is used by a specific user, while the display of the destination address list is limited when convening a conference that does not meet a predetermined condition, or the transmission terminal is used by a user who does not meet the predetermined condition.

### <General Arrangement in Present Embodiment>

Fig. 1 is a schematic diagram for illustrating a transmission system 1 of the present embodiment.

A data provision system in which content data is transmitted from one transmission terminal to another transmission terminal in one direction through a transmission management system, a communication system in which information including an information item indicating user's emotions are transmitted between a plurality of transmission terminals through the transmission management system, etc., are included in the transmission system. The communication system is a system in which a plurality of communication terminals (corresponding to the transmission terminals) transmit the information including information regarding emotions, etc., to each other through a communication management system (corresponding to the transmission management system). A TV conference system, a teleconference system, etc., can be exemplified as the communication system.

In the present embodiment, the transmission management system and the transmission terminal are described assuming the TV conference management system as an example of the communication management system and a TV conference terminal as an example of the communication terminal. That is, the transmission terminal and the transmission management system of the present embodiment are applied not only to the TV conference system but also to the communication system or the transmission system.

The transmission system 1 shown in Fig. 1 includes a plurality of transmission terminals 10aa, 10ab, etc., displays 120aa, 120ab, etc., for the respective transmission terminals 10aa, 10ab, etc., a plurality of relay apparatuses 30a, 30b, 30c, and 30d, a transmission management system 50, a program provision system 90, and a maintenance system 100.

In the transmission system 1, for example, transmission/reception of image data is performed in compliance with a video coding standard H.264/SVC. Specifically, a management information session for transmitting/receiving respective types of management information through the management system 50 is established, and image data and sound data are transmitted/received between the transmission terminals through the relay apparatus 30.

A plurality of terminals 10 transmit the image data and the sound data as examples of content data.

Additionally, hereinafter, "transmission terminal" is simply referred to as "terminal", and "transmission management system" is simply referred to as "management system". Also, an arbitrary terminal among the plurality of terminals 10aa, 10ab, etc., is referred to as "terminal 10", an arbitrary display among the plurality of displays 120aa, 120ab, etc., is referred to as "display 120", and an arbitrary relay apparatus among the plurality of relay apparatuses 30a, 30b, 30c, and 30d is referred to as "relay apparatus 30". Further, a terminal serves as a request source for requesting to start the TV conference is referred to as "request source terminal", and a terminal corresponding to a destination of the request (destination to be relayed to) is referred to as "destination terminal".

The management system 50 integrally manages log-in authentication from the terminal 10, a communication state of the terminal 10, destination list, a communication state of the relay apparatus 30, and the like. Additionally, the image of the image data may be a moving picture, a still image, or a combination of the moving picture and the still image.

A destination list setting apparatus 200 changes setting of a destination list recorded in a destination list management DB 5004 of the management system 50 through a network such as the Internet.

The relay apparatus 30 relays the content data between a plurality of the terminals 10.

A plurality of routers 70a, 70b, 70c, 70d, 70ab, and 70cd select an optimum path for transmitting the image data and the sound data. Additionally, hereinafter, an arbitrary router among the routers 70a, 70b, 70c, 70d, 70ab, and 70cd is referred to as "router 70".

The program provision system 90 includes a HD (Hard Disk) 204 described below, stores a terminal program for achieving respective functions of the terminal 10 (or for having the terminal 10 to serve as respective functional units) therein, and transmits the terminal program to the terminal 10. Also, the HD 204 of the program provision system 90 stores a relay apparatus program for achieving respective functions of the relay apparatus 30 (or for having the relay apparatus 30 to serve as respective functional units) therein, and transmits the relay apparatus program to the relay apparatus 30. Further, the HD 204 of the program provision system 90 stores a transmission management program for achieving respective functions of the management system 50 (or for having the management system 50 to serve as respective functional units) therein, and transmits the transmission management program to the management system 50. Further, the HD 204 of the program provision system 90 stores a maintenance program used for maintenance of the terminal 10 therein, and transmits the maintenance program to the terminal 10.

The maintenance system 100 is a computer for performing maintenance of at least one of the terminal 10, the relay apparatus 30, the management system 50, and the program provision system 90. For example, in a case where the maintenance system 100 is disposed domestically while the terminal 10, the relay apparatus 30, the management system 50, or the program provision system 90 is disposed abroad, the maintenance system 100 remotely performs the maintenance of at least one of the terminal 10, the relay apparatus 30, the management system 50, and the program provision system 90 through a communication network 2. Also, the maintenance system 100 performs the maintenance including management of a model number, a product number, a sale destination, a history of maintenance inspection or failure, etc., with respect to at least one of the terminal 10, the relay apparatus 30, the management system 50, and the program provision system 90 without communication through the communication network 2.

By the way, the terminals 10aa, 10ab, 10ac, etc., the relay apparatus 30a, and the router 70a are connected by LAN 2a so as to be capable of communicating with each other. The terminals 10ba, 10bb, 10bc, etc., the relay apparatus 30b, and the router 70b are connected by the LAN 2b so as to be capable of communicating with each other. Also, the LAN 2a and the LAN 2b are connected by the dedicated line 2ab including the router 70ab so as to be capable of communicating with each other, and the LAN 2a and the LAN 2b are provided in a certain area "A". For example, the area "A" corresponds to Japan, and the LAN 2a is provided in an office located in Tokyo while the LAN 2b is provided in an office located in Osaka.

Meanwhile, the terminals 10ca, 10cb, 10cc, etc., the relay apparatus 30c, and the router 70c are connected by LAN 2c so as to be capable of communicating with each other. The terminals 10da, 10db, 10dc, etc., the relay apparatus 30d, and the router 70d are connected by LAN 2d so as to be capable of communicating with each other. Also, the LAN 2c and the LAN 2d are connected by the dedicated line 2cd including the router 70cd so as to be capable of communicating with each other, and the LAN 2c and the LAN 2d are provided in a certain area "B". For example, the area "B" corresponds to United States of America, and the LAN 2c is provided in an office located in New York while the LAN 2b is provided in an office located in Washington D.C. The area "A" and the area "B" are connected to be capable of communicating with each other through the routers 70ab and 70cd and the Internet 2i.

Also, the management system 50 and the program provision system 90 are connected to be capable of communicating with the terminal 10 and the relay apparatus 30 through the Internet 2i. The management system 50 and the program provision system 90 may be disposed in the area "A" or "B", or may be disposed in another area.

Additionally, in the present embodiment, the LANs 2a, 2b, the dedicated line 2ab, the Internet 2i, the dedicated line 2cd, and the LANs 2c and 2d form a communication network 2 of the present embodiment. Not only wired communication networks but also wireless communication networks such as WiFi (Wireless Fidelity), Bluetooth, a mobile phone network and the like may be included in the communication network 2.

Also, in Fig. 1, respective four digits shown under the terminals 10, the relay apparatuses 30, the management system 50, the routers 70, and the program provision system 90 simply indicate IP addresses of normal IPv4. For example, the IP address of the terminal 10aa is "1.2.1.3". Additionally, although IPv6 may be used instead of IPv4, descriptions are given using IPv4 for convenience of explanation.

Additionally, the respective terminals 10 may be used not only for communications between discrete offices or discrete rooms in the same office, but also for communication within the same room, between indoor terminal and outdoor terminal or between outdoor terminals. In a case where the terminal 10 is used as the outdoor terminal, wireless communication using mobile telephone network, etc., is performed.

### <Hardware Configurations of Present Embodiment>

In the following, hardware configurations of the present embodiment will be described.

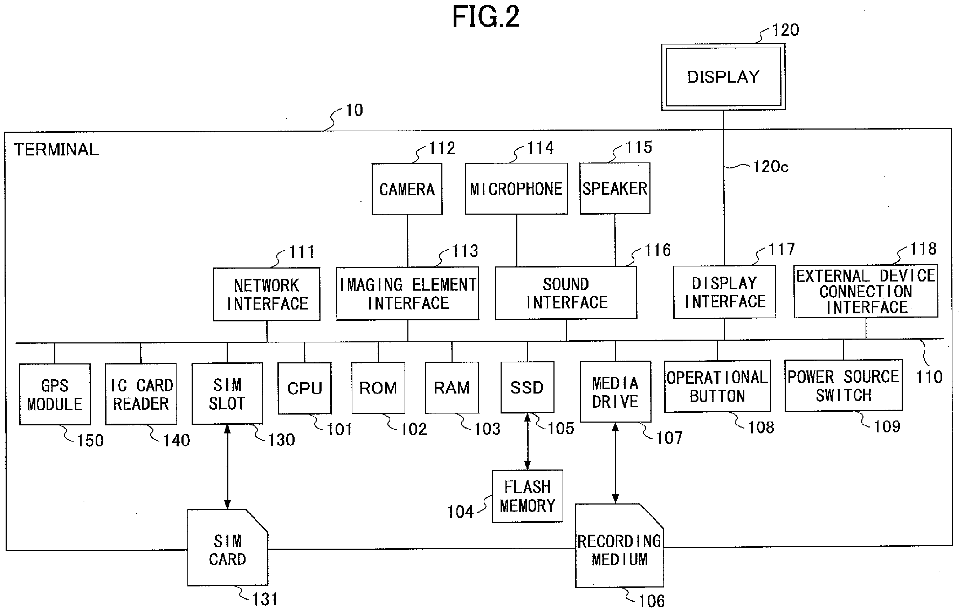

Fig. 2 is a block diagram for illustrating a hardware configuration of the terminal 10 of the present embodiment. As shown in Fig. 2, the terminal 10 of the present embodiment includes a CPU (Central Processing Unit) 101 for controlling entire operation of the terminal 10, a ROM (Read Only Memory) 102 for storing a program for activating the CPU 101 such as IPL (Initial Program Loader), a RAM (Random Access Memory) 103 served as work area for the CPU 101, a flash memory 104 for storing data such as terminal programs, image data and voice data, a SSD (Solid State Drive) 105 for controlling read/write of data from/in the flash memory 104 based on control of the CPU 101, a media drive 107 for controlling read/write of data from/in a recording medium 106 such as a flash memory, an operational button 108 operated when selecting a destination of the terminal 10 and the like, a power source switch 109 for turning on/off power of the terminal 10 and a network interface 111 for transmitting data through the communication network 2. Further, a SIM slot 130 for accessing a SIM (Subscriber Identity Module) card, a SIM card 131 for storing authentication information for destination list request and information indicating authentication success in the destination list request, an IC card reader 140, and a GPS (Global Positioning System) module 150 are included.

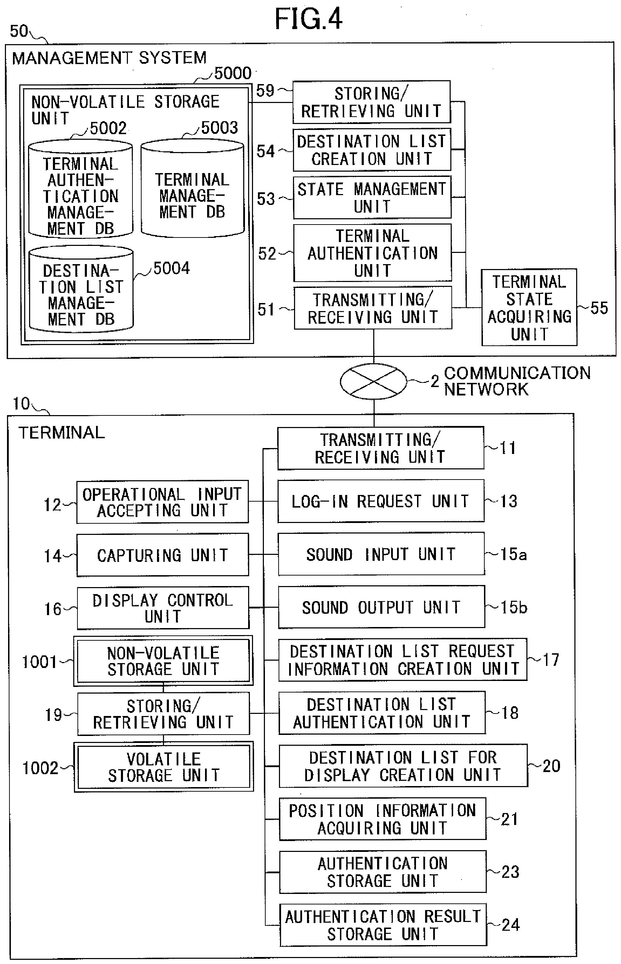

Also, the terminal 10 includes a camera 112 for capturing image of an object to acquire image data under control of the CPU 101, an imaging element interface 113 for controlling the camera 112 to capture images, a built-in microphone 114 for collecting sound, a built-in speaker 115 for emitting sound, a sound interface 116 for collecting and emitting sound by the built-in microphone 114 and the built-in speaker 115 under control of the CPU 101, a display interface 117 for transmitting image data to an external display 120 under control of the CPU 101, an external device connection interface 118 for connecting external devices, and a bus line 110 such as address bus or data bus for electrically connecting the respective elements as shown in Fig. 4.

The display 120 is a display unit for displaying image of an object or an operational icon. A liquid crystal display or an Organic Electroluminescence display can be exemplified as the display 120. Also, the display 120 is connected to the display interface 117 by the cable 120c. The cable 120c may be a cable for analog RGB (VGA) signal, a cable for component video signal, a cable for HDMI (High-Definition Multimedia Interface) signal, or a cable for DVI (Digital Video Interactive) signal.

The camera 112 includes a lens, a solid state imaging element for converting light into electric charges to digitize the image of the object, where a CMOS (Complementary Metal Oxide Semiconductor), a CCD (Charge Coupled Device), etc., is used as the solid state imaging element.

External devices such as an external camera, an external microphone and an external speaker can be connected to the external device interface 118 by a USB (Universal Serial Bus) cable or the like. In a case where the external camera is connected, the external camera is operated in priority to the built-in camera 112 under control of the CPU 101. Similarly, in a case where the external microphone or the external speaker is connected, the external microphone or the external speaker is operated in priority to the built-in microphone 114 or the built-in speaker 115 under control of the CPU 101.

Additionally, the recording medium 106 is detachable from the terminal 10. Also, another non-volatile memory in/from which data is written/read in accordance with the control of the CPU 101, such an EEPROM (Electrically Erasable and Programmable ROM) may be used instead of the flash memory 104.

Further, the aforementioned terminal program may be recorded in a computer readable recording medium including the recording medium 106 in an installable or executable format and distributed. Also, the terminal program may be stored not in the flash memory 104 but in the ROM 102.

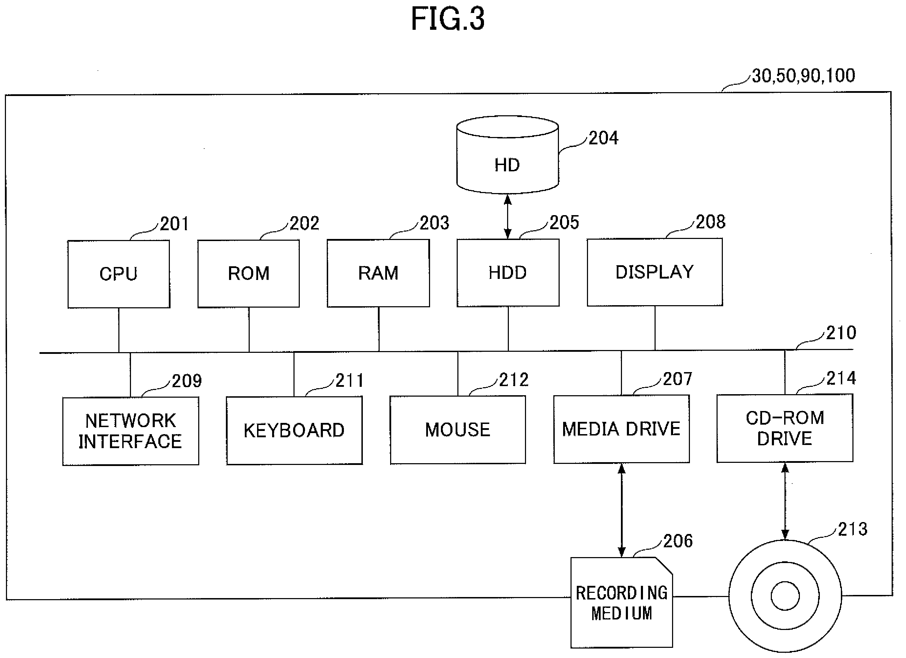

Fig. 3 is a block diagram for illustrating a hardware configuration of the management system of the present embodiment. The management system 50 includes a CPU (Central Processing Unit) 201 for controlling entire operation of the management system 50, a ROM 202 for storing a program for activating the CPU 201 such as IPL, a RAM 203 served as a work area for the CPU 201, a HD 204 for storing data such as a transmission management program, a HDD (Hard Disk Drive) 205 for controlling read/write of data from/in the HD 204 based on control of the CPU 201, a media drive 207 for controlling read/write of data from/in a recording medium 206 such as a flash memory, a display 208 for displaying information such as a cursor, a menu, a window, characters, an image, etc., a network interface 209 for transmitting data through the communication network 2, a keyboard 211 including keys for inputting characters, numbers, instructions, etc., a mouse 212 for selecting or performing instructions, selecting an object to be processed and moving the cursor, a CD-ROM drive 214 for controlling read/write data from/in a CD-ROM (Compact Disc Read Only Memory) 213 which is an example of the detachable recording medium and a bus line 210 such as address bus or data bus for electrically connecting the respective elements as shown in Fig. 3.

Additionally, the aforementioned transmission management program may be recorded in a computer readable recording medium including the recording medium 206 and the CD-ROM 213 in an installable or executable format and distributed. Also, the transmission management program may be stored in ROM 202 instead of the HD 204.

The destination list setting apparatus 200 is a personal computer having a similar hardware configuration to the hardware configuration of the management system 50, and changes the setting of the destination list stored in the destination list management DB 5004 through a communication with the management system 50 using a browser, and the like.

Since the relay apparatus 30 has a similar hardware configuration to the hardware configuration of the management system 50, descriptions thereof are omitted. However, in this case, the relay apparatus program for controlling the relay apparatus 30 is stored in the HD 204. Also, the aforementioned relay apparatus program may be recorded in a computer readable recording medium including the recording medium 206 and the CD-ROM 213 in an installable or executable format and distributed. Further, the relay apparatus program may be stored in ROM 202 instead of the HD 204.

Since the program provision system 90 has a similar hardware configuration to the hardware configuration of the management system 50, descriptions thereof are omitted. However, in this case, a program provision program for controlling the program provision system 90 is stored in the HD 204. Also, the aforementioned program provision program may be recorded in a computer readable recording medium including the recording medium 206 and the CD-ROM 213 in an installable or executable format and distributed. Further, the program provision program may be stored in ROM 202 instead of the HD 204.

Additionally, the program provision program may be recorded in a computer readable recording medium such as a CD-R (Compact Disc Recordable), a DVD (Digital Versatile Disk), and a Blue-ray disk, that are examples of the aforementioned detachable recording medium to be distributed.

### <Functional Configuration of Present Embodiment>

In the following, a functional configuration of the present embodiment will be described. Fig. 4 is a block diagram for illustrating the functional configurations of the terminal, the apparatus, and the system included in the transmission system 1 of the present embodiment. In Fig. 4, the terminal 10 and the management system 50 are connected to each other through the communication network 2 so as to perform data communication. Also, the program provision system 90, etc., shown in Fig. 1 are not shown in Fig. 4 since the program provision system 90, etc., are not directly related to the communication of the destination list.

### <Functional Configuration of Terminal>

The terminal 10 includes a transmitting/receiving unit 11, an operational input accepting unit 12, a log-in request unit 13, a capturing unit 14, a sound input unit 15a, a sound output unit 15b, a display control unit 16, a storing/retrieving unit 19, and a destination list for display creation unit 20. The respective functional units are achieved by operating any of the elements shown in Fig. 2 based on instructions from the CPU 101 according to programs retrieved from the flash memory 104 and loaded into the RAM 103.

Also, the terminal 10 includes a volatile storage unit 1002 configured by the RAM 103 shown in Fig. 2, and a non-volatile storage unit 1001 configured by the flash memory 104 shown in Fig. 2. In the following, the respective functional units of the terminal 10 will be described with reference to Fig. 2 and Fig. 4. Additionally, in the following, relations with elements or units important to achieve the respective functional units of the terminal 10 shown in Fig. 4 are also described in order to explain the respective functional units of the terminal 10.

An authentication storage unit 23 of the terminal 10 shown in Fig. 4 is achieved by the SIM card 131 or the SSD 105 shown in Fig. 2, and stores authentication information for destination list request.

An authentication result storage unit 24 is achieved by the SIM card 131 or the SSD 105 shown in Fig. 2, and stores information indicating authentication success in the destination list request.

A position information acquiring unit 21 is achieved by the GPS module 150 shown in Fig. 2, and acquires information indicating a current position.

A destination list authentication unit 18 is achieved by instructions of the CPU 101 shown in Fig. 2. The destination list authentication unit 18 collates a password input through the operational button 108 or IC card information input from the IC card reader 140, and authentication information for the destination list request stored in the authentication storage unit 23, and stores the information indicating authentication success in the destination list request in the authentication result storage unit 24 in a case where the password or the IC card information is coincident with the authentication information for the destination list request.

A destination list request information creation unit 17 is achieved by instructions of the CPU 101 shown in Fig. 2. The authentication list request information creation unit 17 creates destination list request information including the information indicating authentication success in the destination list request stored in the authentication result storage unit 24, and position information, etc., acquired from the position information acquiring unit 21.

The transmitting/receiving unit 11 is achieved by instructions of the CPU 101 and the network interface 111, and transmits/receives data (or information) to/from the terminal of a counterpart, apparatus, system or the like through the communication network 2. The transmitting/receiving unit 11 transmits the destination list request information created by the destination request information creation unit 17 to the management system 50 before starting a communication with a desired destination terminal, and starts to receive a destination list, which is a list of destination candidates for the terminal 10, and state information indicating states of the respective terminals included in the destination list from the management system 50. Additionally, the state information indicates not only operational state (ONLINE or OFFLINE) of the respective terminals 10, but also detailed state indicating whether the ONLINE is ONLINE (BUSY) or ONLINE (SUSPENDED). Also, the state information indicates not only the operational states of the respective terminals 10 but also states indicating that the cable 120c is detached from the terminal 10, an image is not displayed while sound is output, the sound is not output (MUTE), and the like. In the following, for example, the state information indicates the operational state.

The operational input accepting unit 12 is achieved by the instructions of the CPU 101, the operational button 108 and the power source switch 109 shown in Fig. 2, and accepts respective input operations from a user. For example, when the user turns on the power source switch 109 shown in Fig. 2, the operational input accepting unit 12 shown in Fig. 4 accepts power-on to turn on the power of the terminal 10.

The log-in request unit 13 is achieved by the instructions of the CPU 101 shown in Fig. 2, and automatically transmits log-in request information indicating request for log-in and a current IP address of the request source terminal to the management system 50 by using the transmitting/receiving unit 11 through the communication network 2 in response to accepting the aforementioned power-on. Also, when the user turns off the power source switch 109, the operational input accepting unit 12 totally turns off the power of the terminal 10 after the transmitting/receiving unit 11 transmits the state information indicating the power-off to the management system 50. Thus, the management system 50 can recognize that the power of terminal 10 is turned from on to off.

The capturing unit 14 is achieved by the instructions of the CPU 101, camera 112, and the imaging element interface 113 shown in Fig. 2, and captures an object to output image data of the captured image.

The sound input unit 15a is achieved by the instructions of the CPU 101, sound interface 116 and the microphone 114 shown in Fig. 2. The sound input unit 15a inputs sound data of a sound signal after converting voice of the user collected by the microphone 114 into the sound signal. The sound output unit 15b is achieved by the instructions of the CPU 101, sound interface 116. The sound output unit 15b outputs the sound signal of the sound data to the speaker 115 to output the sound from the speaker 115.

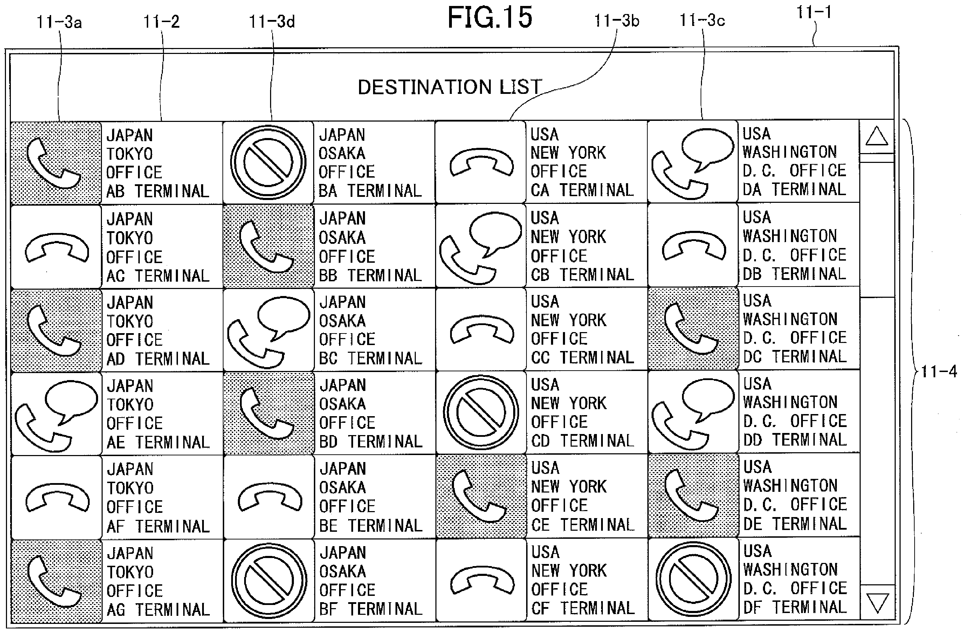

The display control unit 16 is achieved by the instructions of the CPU 101 and the display interface 117 shown in Fig. 2, and performs control for transmitting the image data to the external display 120. Further, the display control unit 16 displays the destination list including respective destination names in the display 120 before starting the communication of the TV conference between the request source terminal and the destination terminal, where the state information received after starting reception of the transmitting/receiving unit 11 has been reflected in the displayed destination list. For example, a display list frame 11-1 shown in Fig. 15 is displayed by a display control unit 16. In the destination list frame 11-1, the destination name "Japan Tokyo office AB terminal" 11-2, etc., are shown, and icons 11-3a, 11-3b, 11-3c, and 11-3d indicating the state information of the respective destination names. Among these icons, the icon 11-3a indicates that a terminal of the destination candidate is "ONLINE" (in an online state) and the terminal is available (can be communicated with). The icon 11-3b indicates that a terminal of the destination candidate is "OFFLINE" (in an offline state) and the terminal is unavailable (cannot be communicated with). The icon 11-3c indicates that a terminal of the destination candidate is "BUSY" (currently communicated with another terminal) and a tripartite communication will be accepted. The icon 11-3d indicates that a terminal of the destination candidate is "BUSY" and a tripartite communication will not be accepted since the communication is temporary suspended due to absence of the user. Also, a scroll bar 11-4 is displayed in right side of the destination list frame 11-1, where respective destination name not shown in Fig. 15 will be displayed when the triangular icons indicating upper direction und lower direction are operated.

Also, the storing/retrieving unit 19 is achieved by the instructions of the CPU 101, and the SSD 105 shown in Fig. 2. The storing/retrieving unit 19 stores data in the non-volatile storage unit 1001 and retrieves data from the non-volatile storage unit 1001. In the non-volatile storage unit 1001, a terminal ID (Identification) for identifying the terminal 10, a password for log-in, etc., are stored. Further, the storing/retrieving unit 19 stores data in the volatile storage unit 1002 and retrieves data from the volatile storage unit 1002. In the volatile storage unit 1002, the image data and the sound data received in the communication with the destination terminal are stored and updated in every reception. The image corresponding to the image data before being updated is displayed in the display 120 and the sound corresponding to the sound data before being updated is output from the speaker 150.

The destination list for display creation unit 20 creates and updates the destination list as shown in Fig. 15 based on destination list information (described below) and the state information of the terminals 10 received from the management system 50.

Additionally, the terminal ID and a relay apparatus ID (described below) of the present embodiment mean identification information including language, characters, marks, signs, etc., for identifying the terminal 10, relay apparatus 30, and the user. Also, the terminal ID and a relay apparatus ID may be formed by combining at least two of the language, characters, marks, signs, etc.

### <Functional Configuration of Management System>

The management system 50 includes a transmitting/receiving unit 51, a terminal authentication unit 52, a state management unit 53, a destination list creation unit 54, a terminal state acquiring unit 55, and a storing/retrieving unit 59. These functional units are achieved by operating any of the elements shown in Fig. 3 based on instructions from the CPU 201 according to management system program retrieved from the HD 204 and loaded into the RAM 203. Also, the management system 50 includes a non-volatile storage unit 5000 achieved by the HD 204 shown in Fig. 3, where the data (or information) stored in the non-volatile storage unit 5000 is kept after turning off the power of the management system 50. Also, the destination list frame 11-1 shown in Fig. 15 is stored in the non-volatile storage unit 5000.

### (Destination List Management Table)

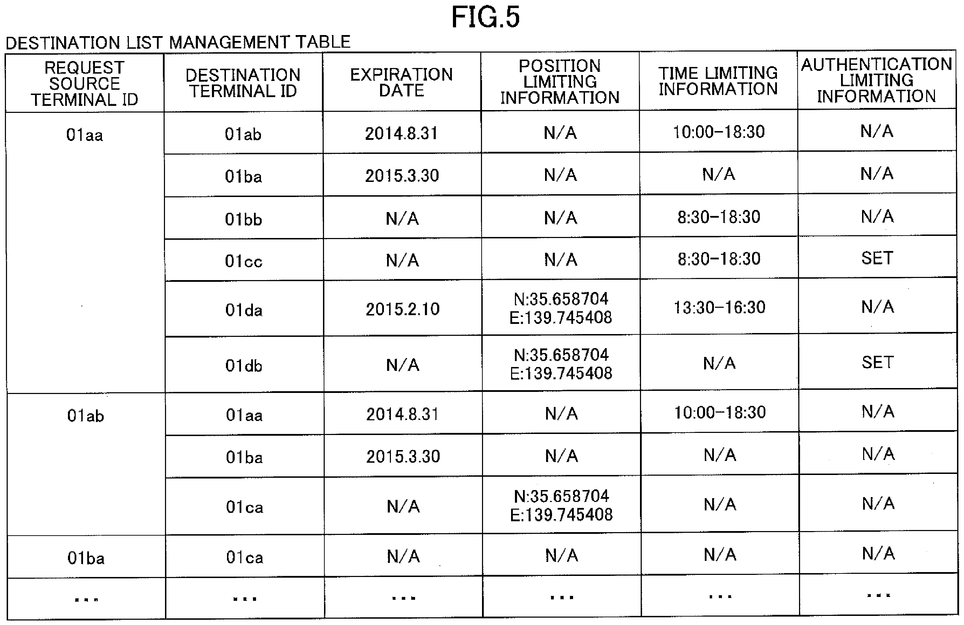

In the non-volatile storage unit 5000, a destination list management DB 5004 which consists of a destination list management table shown in Fig. 5. In the destination list management table, terminal IDs of all destination terminals registered as the destination candidates are associated with the respective terminal IDs of the request source terminals that requests starting the communication of the TV conference. The destination list management table can be managed by the destination list setting apparatus 200, etc., and an expiration date, position limiting information, time limiting information, and authentication limiting information can be set on a destination terminal -by- destination terminal basis.

The expiration date indicates a date when the destination is deleted. The destination list management DB 5004 checks the expiration date on a daily basis to delete the destination whose expiration date has been passed. A destination whose expiration date is set to be "non" is not automatically deleted.

The position limiting information is used for allowing only request source terminals within a certain range to display the destination list, where the certain range is set with a position indicated by the position limiting information as a center of the certain range.

The time limiting information is used for allowing a request source terminal to display the destination list only when the current time is within a time range set by the time limiting information.

The authentication limiting information is used for allowing a request source terminal to display the destination list only when the authentication of the destination list request from the request source terminal has been successful by using the password or the IC card information.

### (Terminal Authentication Management Table)

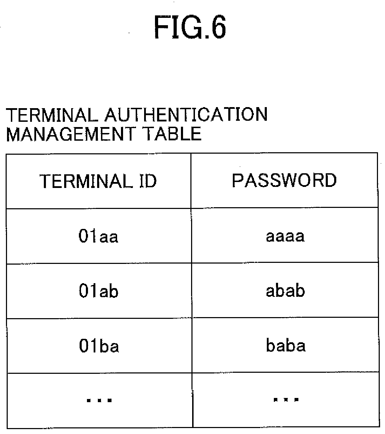

Further, in the non-volatile storage unit 5000, a terminal authentication management DB 5002 which consists of a terminal authentication management table shown in Fig. 6. In the terminal authentication management table, all the terminal IDs of the respective terminals 10 managed by the management system 50 are associated with the passwords. For example, in the terminal authentication management table shown in Fig. 6, the terminal ID of the terminal 10aa is "01aa" and the password thereof is "aaaa".

### (Terminal Management Table)

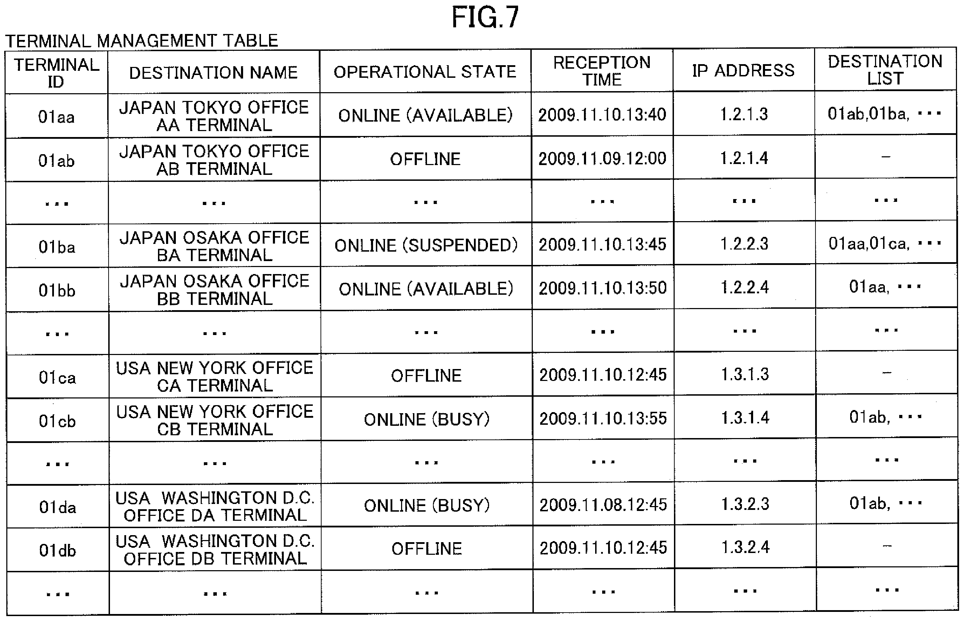

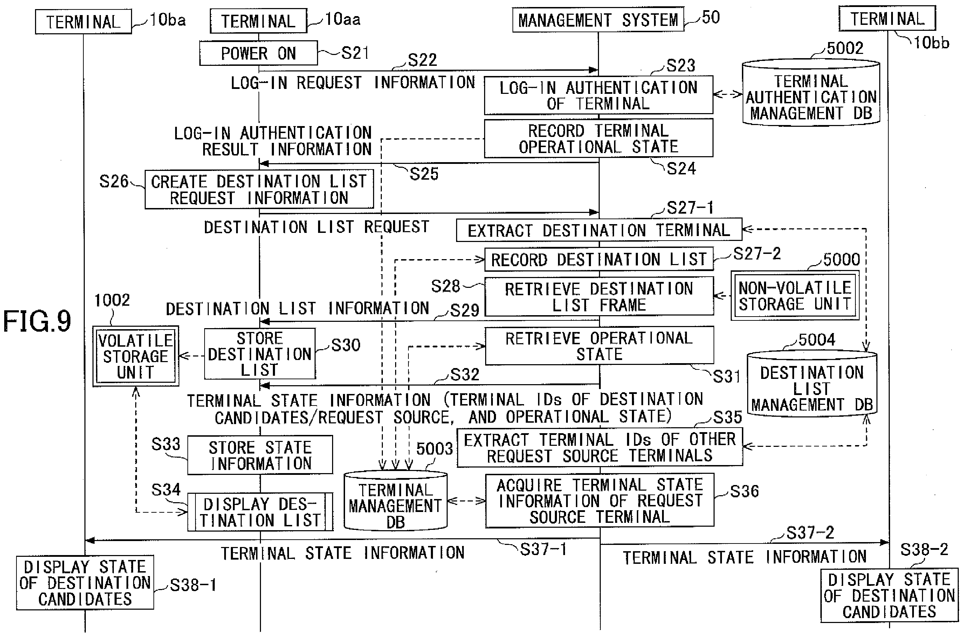

Also, in the non-volatile storage unit 5000, a terminal management DB 5003 which consists of a terminal management table shown in Fig. 7. In the terminal management table, destination names of the respective terminals 10 as the destination terminals, the operational states of the respective terminals 10, reception times of log-in request information (described below) received by the management system 50, the IP addresses of the respective terminals 10, and the destination lists stored in step S27-2 shown in Fig. 9 (described below) are associated with the respective terminal IDs of the terminals 10. For example, in the terminal management table shown in Fig. 7, as for the terminal 10aa whose terminal ID is "01aa", the destination name is "Japan Tokyo office AA terminal", the operational state is "ONLINE (AVAILABLE)", the reception time of log-in request information received by the management system 50 is "13:40 November 10, 2009", the IP address is "1.2.1.3", and the destination list is "01ab, 01ba, etc.". In the following, the respective functional units of the management system 50 will be described. Additionally, in the following, relations with elements or units important to achieve the respective functional units of the management system 50 shown in Fig. 4 are also described in order to explain the respective functional units of the management system 50.

The transmitting/receiving unit 51 is achieved by instructions of the CPU 201 and the network interface 209 shown in Fig. 3, and transmits/receives data (or information) to/from the terminals, apparatuses, system, through the communication network 2.

The terminal authentication unit 52 is achieved by instructions of the CPU 201 shown in Fig. 3. The terminal authentication unit 52 searches for the terminal authentication management DB 5002 stored in the non-volatile storage unit 5000 with the terminal ID and the password included in the log-in request information received by the transmitting/receiving unit 51 as search keys to determine whether the same terminal ID and the password are recorded in the terminal authentication management DB 5002, thereby authenticates the terminal 10.

The state managing unit 53 is achieved by the instructions of the CPU 201 shown in Fig. 3. The state managing unit 53 stores the operational states of the request source terminal, the reception time of log-in request information received by the management system 50, and the IP address of the request source terminal associated with the terminal ID of the request source terminal in the terminal management DB 5003 (see Fig. 7) so as to manage the operational state, etc., of the request source terminal. Also, the state management unit 53 changes the operational state in the terminal management DB 5003 (see Fig.7) into OFFLINE and delete the information stored as the destination list in the terminal management DB 5003 when the operational state indicating the power-off of the terminal 10 is transmitted in response to the user turning off the power source switch 109.

The destination list creation unit 54 is achieved by instructions of the CPU 201 shown in Fig. 3. The destination list creation unit 54 searches for the destination list management DB 5004 (see Fig. 5) with the terminal ID of the request source terminal that has requested the log-in as a search key to retrieve the terminal ID of a destination candidate as the destination terminal capable of communicating with the request source terminal, thereby extracting the terminal ID. Also, the destination list creation unit 54 searches for the destination list management DB 5004 (see Fig. 5) with the terminal ID of the request source terminal that has requested the destination list as a search key to retrieve the terminal ID of another terminal that has registered the terminal ID of the request source terminal as a destination candidate.

The terminal state acquiring unit 55 is achieved by instructions of the CPU 201 shown in Fig. 3. The terminal state acquiring unit 55 searches for the terminal management DB 5003 (see Fig. 7) with the terminal ID of the candidate of the destination terminal extracted by the destination list creation unit 54 as a search key, thereby retrieving the operational state on a terminal ID -by- terminal ID basis. Thus, the terminal state acquiring unit 55 can acquire the operational state of the candidate of the destination terminal capable of communicating with the request source terminal that has requested the destination list. Also, the terminal state acquiring unit 55 searches for the terminal management DB 5003 with the terminal ID extracted by the destination list creation unit 54 as a search key to retrieve the operational state of the request source terminal that has requested the destination list.

The storing/retrieving unit 59 is achieved by the instructions of CPU 201 and the HDD 205 shown in Fig. 3. The storing/retrieving unit 59 stores data in the non-volatile storage unit 5000 and retrieves the data from the non-volatile storage unit 5000.

### <Processes and Operations of Present Embodiment>

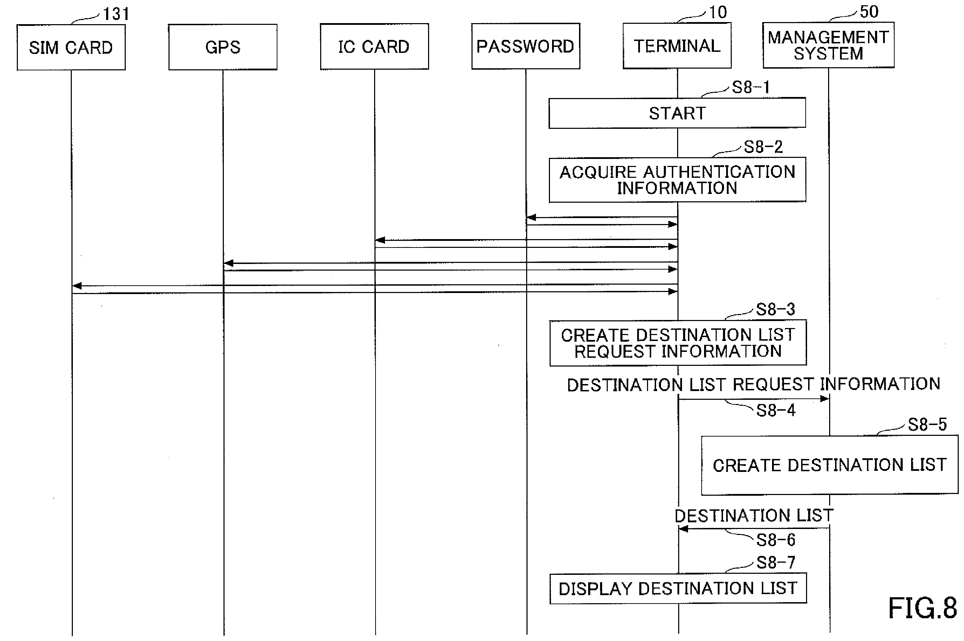

In the following, processes and operations of the present embodiment will be schematically described with reference to Fig. 8. Fig. 8 is a sequence diagram for schematically illustrating processes and operations of the present embodiment.

As shown in Fig. 8, in the present embodiment, when the terminal 10 is started (step S8-1), the password input by using the operational button 108 or the IC card information input from the IC card reader 140, and the position information of the GPS is acquired, and the authentication information required for displaying the destination list is retrieved (acquired) from the SIM card 131 (step S8-2). The destination list request information including the acquired information is created (step S8-3) to be transmitted to the management system 50 (step S8-4). The management system 50 creates the destination list based on the received destination list request information and information indicating the current time (step S8-5) to transmit the created destination list to the terminal 10 (step S8-6). The terminal 10 displays the received destination list (step S8-7).

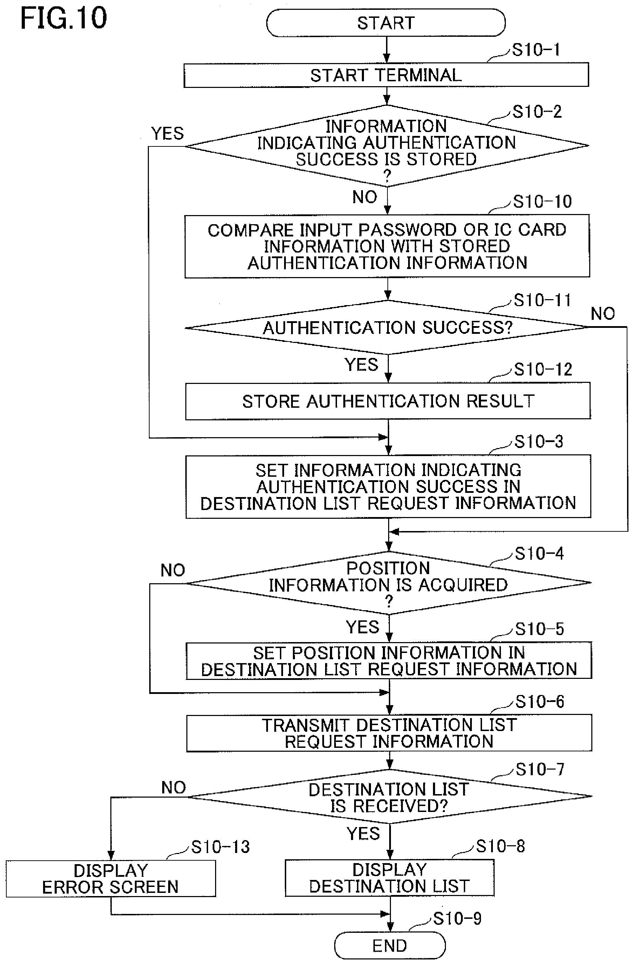

In the following, processing method of the transmission system 1 of the present embodiment will be described with reference to Fig. 9 and Fig. 10.

First, a process of the terminal 10 for receiving the destination list from the management system 50 to display the destination list will be described with reference to Fig. 9.

Upon the user turning on the power source switch 109 shown in Fig. 2, the operational input accepting unit 12 shown in Fig. 4 accepts the power-on to turn on the power of the terminal 10 (step S21). The log-in request unit 13 automatically transmits the log-in request information indicating request for log-in to the management system 50 by using the transmitting/receiving unit 11 through the communication network 2 in response to accepting the aforementioned power-on (step S22). The terminal ID and the password for identifying the request source terminal (own terminal) 10aa are included in the log-in request information. The terminal ID and the password are retrieved from the non-volatile storage unit 1001 through the storing/retrieving unit 19 to be provided to the transmitting/receiving unit 11. Additionally, when the log-in request information is transmitted from the terminal 10aa to the management system 50, the management system 50 can be aware of the IP address of the terminal 10aa.

The terminal authentication unit 52 of the management system 50 searches for the terminal authentication management DB 5002 (see Fig. 6) stored in the non-volatile storage unit 5000 with the terminal ID and the password included in the log-in request information received by the transmitting/receiving unit 51 as search keys to determine whether the same terminal ID and the password are recorded in the terminal authentication management DB 5002, thereby performing a log-in authentication of the terminal 10 (step S23). In a case where the same terminal ID and the password are recorded in the terminal authentication management DB 5002 and the log-in request is determined to be a log-in request from an authorized terminal 10 by the terminal authentication unit 52, the state managing unit 53 stores the operational states of the request source terminal (terminal 10aa), the reception time of log-in request information received by the management system 50, and the IP address of the request source terminal associated with the terminal ID of the request source terminal in the terminal management DB 5003 (see Fig. 7) (step S24). Thus, in the terminal management table shown in Fig. 7, the operational state "ONLINE", the reception time "2009.11.10 13:40 (13:40 November 10, 2009)" and the IP address "1.2.1.3" are recorded to be associated with the terminal ID "01aa".

The transmitting/receiving unit 51 of the management system 50 transmits log-in authentication result information indicating the authentication result obtained by the terminal authentication unit 52 to the request source terminal (terminal 10aa) that has requested the log-in through the communication network 2 (step S25). In the following, descriptions will be given assuming that the terminal authentication unit 52 determines the terminal to be an authorized terminal.

Upon receiving the authentication result information indicating the determination result that the terminal 10aa is an authorized terminal, the request source terminal 10aa transmits the destination list request information created by the destination list request information creation unit 17 through a process shown in Fig. 10 from the transmitting/receiving unit 11 to the management system 50 via the communication network 2 (step S26). Thus, the transmitting/receiving unit 51 of the management system 50 receives the destination list request information.

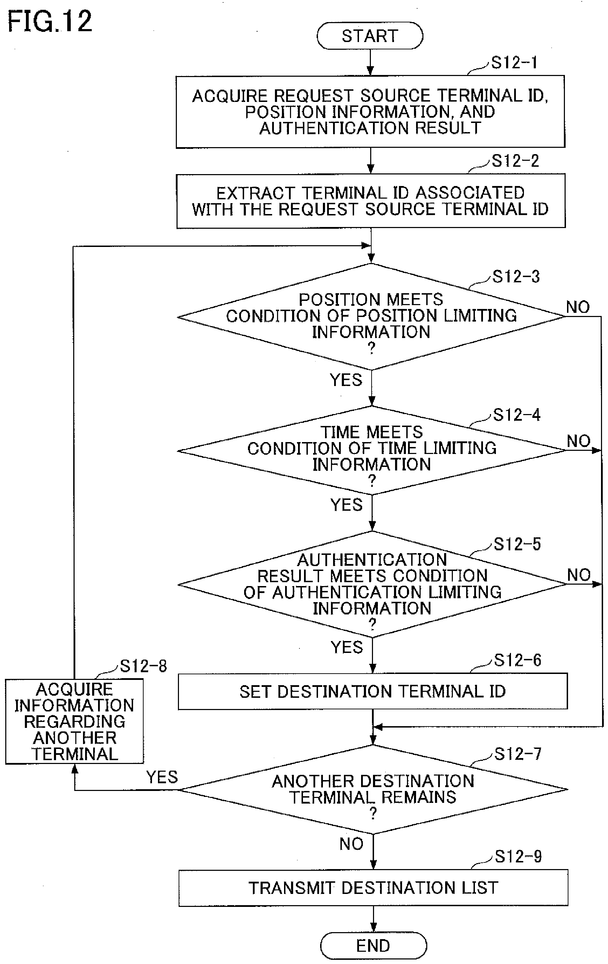

The destination list creation unit 54 searches for the destination list management DB 5004 (see Fig. 5) with the terminal ID of the request source terminal that has requested the log-in as a search key, and creates the destination list that is a list of the terminal IDs of the destination terminals selected through a process shown in Fig. 12 as terminals that respectively meet a condition of the destination list request information, thereby retrieving the destination names corresponding to the terminal IDs from the terminal management DB 5003 (see Fig. 7) (step S27-1). Thus, for example, the terminal IDs "01ab", "01ba", etc., and the terminal names "Japan Tokyo office AB terminal", "Japan Osaka office BA terminal", etc., corresponding to the respective terminal IDs are extracted.

The created destination list is recorded in the terminal management DB 5003 (see Fig. 7) associated with the terminal ID of the request source terminal (step S27-2). Thus, the destination list "01ab, 01ba, etc." associated with the terminal ID "01aa" is recorded in the terminal management table shown in Fig. 7.

The transmitting/receiving unit 51 of the management system 50 retrieves data of the destination list frame (data corresponding to the destination list frame 11-1 shown in Fig. 15) from the non-volatile storage unit 5000 through the storing/retrieving unit 59 (step S28), and transmits the destination list frame and "destination list information (that includes the destination list frame, the terminal IDs, and the destination names)" including the terminal IDs and the destination names extracted by the destination list creation unit 54 to the request source terminal (terminal 10aa) (step S29). Thus, the request source terminal (terminal 10aa) receives the destination list information by using the transmitting/receiving unit 11, and stores the destination list information in the volatile storage unit 1002 by using the storing/retrieving unit 19 (step S30).

In the following, the process (regarding steps S26 and S34 shown in Fig. 9) from creation of the destination list request information to display of the destination list performed by the destination list request information creation unit 17 of the terminal 10 will be described in detail with reference to Fig. 10.

The destination list request information creation unit 17 accepts the power-on shown in step S21 of Fig. 9, or detects the successful log-in by receiving the authentication result of step S25 (step S10-1). The terminal 10 determines whether the information indicating the authentication success in the destination list request is stored in the authentication result storage unit 24 (step S10-2), and sets the information indicating the authentication success in the destination list request in the destination list request information (step S10-3) in a case where the information indicating the authentication success in the destination list request is determined to be stored (YES in step S10-2).

The terminal 10 determines whether the position information is acquired from the position information acquiring unit 21 (step S10-4), and sets the position information in the destination list request information (step S10-5) in a case where the position information is determined to be acquired.

The destination list request information is transmitted to the management system 50 (step S10-6) as described in step S26 of Fig. 9. The terminal 10 determines whether the destination list is received form the management system 50 in a certain period (step S10-7), and displays the destination list in a case where the destination list is determined to be received in the certain period (step S10-8). In a case where the destination list is determined not to be received in the certain period, an error screen is displayed (step S10-13).

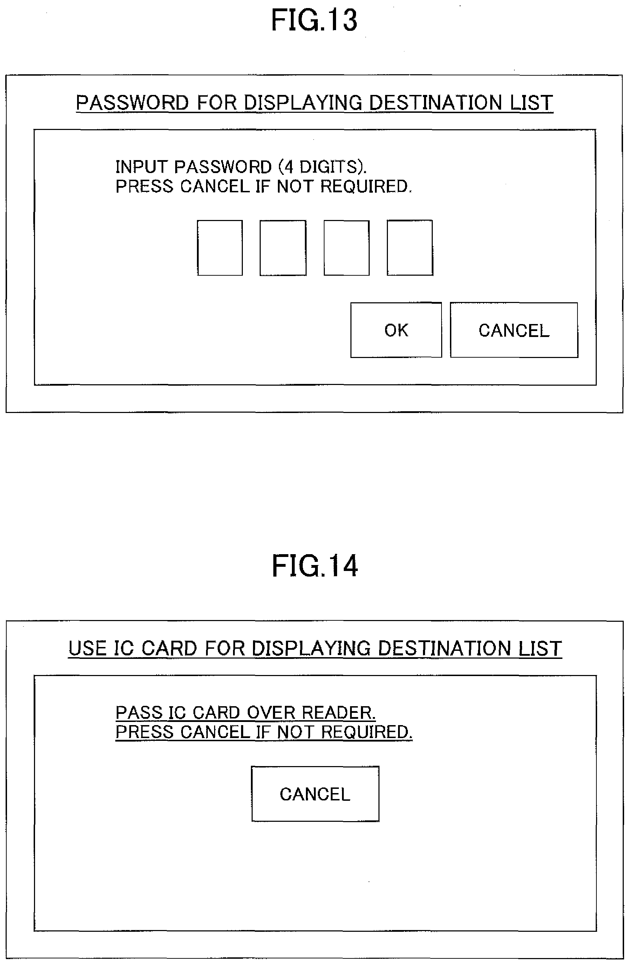

In a case where the information indicating the authentication success in the destination list request is determined not to be stored in the authentication result storage unit 24 (NO in step S10-2), the terminal 10 displays a screen shown in Fig. 13 or Fig. 14 to prompt the user to input the password or the IC card information. The input information is compared with the authentication information for the destination list request stored in the authentication storage unit 23 (step S10-10) to determine whether the input information is coincident with the authentication information for the destination list request, that is, to determine whether the authentication successes (step S10-11). In a case where the input information is determined to be coincident with the authentication information for the destination list request, the information indicating the authentication success in the destination list request is stored in the authentication result storage unit 24 (step S10-12). Hence, the user may not need to input the password or the IC card from the next time. The process is advanced to step S10-3. In a case where the input information is determined not to be coincident with the authentication information for the destination list request in step S10-11, the process is advanced to step S10-4.

Although, in the example described above, the information indicating the authentication success in the destination list request is set in the destination list request information while the information indicating the authentication success in the destination list request is not set in a case where the authentication for destination list request has resulted in failure, information indicating the authentication failure in the destination list request may be set in a case where the authentication for destination list request has resulted in failure.

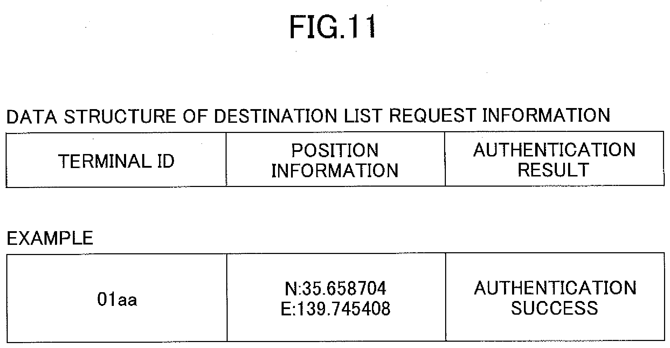

Fig. 11 is a diagram for illustrating an example of data structure of the destination list request information. In Fig. 11, "01aa" is recorded as the terminal ID of the own terminal, "N (northern latitude): 35.658704" and "E (east longitude): 139.745408" are recorded as the position information indicating current position, and "authentication success" is recorded as the information indicating authentication result.

In the following, the process (regarding step S27 of Fig. 9) for creating the destination list performed by the destination list creation unit 54 of the management system 50 will be described in detail with reference to Fig. 12. Fig. 12 is a flowchart for illustrating an example process for creating the destination list.

The destination list creation unit 54 acquires the terminal ID of the request source terminal, the position information of the request source terminal, and the information indicating authentication result included in the destination list request information shown in Fig. 11 (step S12-1). The destination list creation unit 54 searches for the destination list management DB 5004 (see Fig. 5) with the terminal ID of the request source terminal as a search key to extract the terminal ID of the destination terminal associated with the terminal ID of the request source terminal (step S12-2). The destination list creation unit 54 determines whether the position information of the request source terminal meets the condition of the position limiting information of the destination terminal (step S12-3), and in a case where the position information of the request source terminal meets the condition, determines whether the time at which the destination list request information is received (current time) meets the condition of the time limiting information of the destination terminal (step S12-4). In a case where the current time meets the condition, the destination list creation unit 54 determines whether the authentication result in the destination list request meets the condition of the authentication limiting information of the destination terminal (step S12-5). In a case where the authentication result in the destination list request meets the condition, the terminal ID of the destination terminal is set in the destination list (step S12-6). The destination list creation unit 54 determines whether another destination terminal associated with the terminal ID of the request source terminal remains (step S12-7), and acquires information regarding the other destination terminal (step S12-8) in a case where the other destination terminal associated with the terminal ID of the request source terminal remains, thereby proceeding to a process of step S12-2. In a case where any of conditions is not met in step S12-3, S12-4, and S12-5, the process is advanced to step S12-7.

Thus, for example, in a case where the terminal ID of the request source terminal included in the destination list request information is "01aa" the position information of the request source terminal indicates an area within a radius of 1 km from a position of "N (northern latitude) : 35.658704" and "E (east longitude): 139.745408", the information indicating authentication result is "authentication success", and the current time is within 13:00 to 16:30, the terminal IDs of "01ab", "01ba", "01bb", "01cc", "01da", and "01db" are set in the destination list management table shown in Fig. 5. In a case where the current time is within 18:30 to 8:30 (the following morning), only terminal IDs of "01ba" and "01db" are set in the destination list since the terminals whose terminal IDs are "01ab", "01bb", "01cc", "01da", and "01db" do not meet the condition of the time limiting information.

Also, for example, in a case where the position of the request source terminal is not within a radius of 1 km from a position of "N (northern latitude): 35.658704" and "E (east longitude): 139.745408", and the information indicating authentication result is "authentication success", and the current time is within 13:30 to 16:30, only terminal IDs of "01ab", "01ba", "01bb" and "01cc" are set in the destination list since the terminals whose terminal IDs are "01da" and "01db" do not meet the condition of the position limiting information.

Further, for example, in a case where the position of the request source terminal is within a radius of 1 km from a position of "N (northern latitude): 35.658704" and "E (east longitude):139.745408", and the information indicating authentication result is not "authentication success", and the current time is within 13:30 to 16:30, only terminal IDs of "01ab", "01ba", "01bb" and "01da" are set in the destination list since the terminals whose terminal IDs are "01cc" and "01db" do not meet the condition of the authentication limiting information.

The terminal state acquiring unit 55 of the management system 50 searches for the terminal management DB 5003 (see Fig. 7) with the terminal ID ("01ab", "01ba", "01db", etc.) of the candidate of the destination terminal extracted by the destination list creation unit 54 as a search key, thereby retrieving the operational state on a terminal ID by- terminal ID basis to obtain the operational states of the respective candidates of the destination terminals "10ab", "10ba", "10bb", etc., (step S31).

The transmitting/receiving unit 51 transmits "terminal state information" including the terminal ID "01ab" that is used as the search key in step S27 and the operational state (ONLINE (AVAILABLE)) of the corresponding terminal (terminal 10ab) to the request source terminal (terminal 10aa) through the communication network 2 (step S32). Also, in step S32, the transmitting/receiving unit 51 respectively transmits other "terminal state information" items, such as "terminal state information" item including the terminal ID "01ba" and the operational state (ONLINE (SUSPENDED)) of the corresponding terminal (terminal 10ba), to the request source terminal (terminal 10aa).

The storing/retrieving unit 19 of the request source terminal (terminal 10aa) sequentially stores the state information items received from the management system 50 in the volatile storage unit 1002 (step S33). Hence, the request source terminal (terminal 10aa) can obtain the respective current operational states of the candidates of the destination terminals 10ab, etc., capable of communicating with the request source terminal.

The destination list for display creation unit 20 of the request source terminal (terminal 10aa) creates the display list in which the states of the terminals 10 as the destination candidates has been reflected based on the destination list information and the operational state information stored in the volatile storage unit 1002. The created destination list is displayed in the display 120 shown in Fig. 2 (step S34) by the display control unit 16.

Meanwhile, in Fig. 9, the destination list creation unit 54 of the management system 50 searches for the terminal management DB 5003 (see Fig. 7) with the terminal ID "01aa" of the request source terminal that has requested the destination list as the search key, thereby extracting the terminal IDs of other request source terminals whose destination list includes the terminal ID "01aa" (step S36). In a case of the terminal management table shown in Fig. 7, the extracted terminal IDs are "01ba" and "10bb".

The "terminal state information" including the terminal ID "01aa" of the request source terminal, which has been acquired in step S36, and the operational state thereof is transmitted (step S37-1 and step S37-2). Additionally, when transmitting the "terminal state information" to the terminals 10ba and 10bb, the transmitting/receiving unit 51 refers to the IP addresses of the respective terminals recorded in the terminal management table based on the terminal IDs "01ba" and "10bb". Thus, the terminal ID "01aa" and the operational state "ONLINE (AVAILABLE)" of the request source terminal (terminal 10aa) that has requested the destination list can be obtained by other request source terminals (terminals 10ba and 10bb) whose destination list includes the terminal ID "10aa".

Meanwhile, in other terminals 10, upon the user turning on the power source switch 109 shown in Fig. 2, the operational input accepting unit 12 shown in Fig. 4 accepts the power-on and turns on the power of the terminal 10 to perform the processes similar to steps S22 to S38-2, and descriptions on the aforementioned processes are omitted.

### <Main Effect of Present Embodiment>

As described above, according to the present embodiment, the destination list information is not managed by the respective terminals 10, but is managed by the management system 50, where the management system 50 manages destination list information items for all terminals 10. When the request source terminal logs-in the management system 50 by using the terminal ID of request source terminal to download the destination list corresponding to the terminal ID from the management system 50, the destination list created in accordance with the terminal ID and additional information can be transmitted, where the additional information includes the position information of the request source terminal, the current time, the information indicating the authentication result using the IC card, and the like.

When the destination list information is stored in the non-volatile storage units of the respective terminals 10, the non-volatile storage unit may be detached and installed in another personal computer, etc., and the destination list information stored therein may be browsed by a third party. According to the present embodiment, secure destination lists that meet conditions can be displayed since only destination lists created in accordance with the terminal ID and the additional information can be downloaded and displayed.

Also, even if the conference room is rented to other parties, the terminal is taken outside, etc., the secure destination lists that meet conditions can be displayed since information of the destination terminals can be received only when the position information of the request source terminal meets a certain condition.

Further, according to the present embodiment, the information of the destination terminals can be received by the request source terminal only when the current time meets a certain condition. Therefore, for example, when the destination list is set to be displayed only during the conference with a client, the secure destination lists that meet conditions can be displayed.

Also, the secure destination lists that meet conditions can be displayed by defining a terminal to which the information of the destination terminals shall not be disclosed in advance, since the information of destination terminals can be received only when the authentication of the request source terminal is successful.

Further, in a case where a contactless IC card is used as an authentication information input unit of the request source terminal, input operations of the authentication information can be easily performed.

Also, the user does not need to repeatedly input the authentication information since the information indicating the successful authentication of the request source terminal can be stored in the SIM card or in the storage unit of the request source terminal.

Further, according to the present embodiment, the management system 50 deletes information items of destination terminals whose expiration date has been passed. Therefore, management of the destination terminals can be simplified and the secure destination lists that meet conditions can be displayed since information items regarding unnecessary destination terminals are deleted.

### <Variation>

Additionally, upon detecting that the authentication storage unit 23 storing the information indicating authentication success in the destination list request is detached, the destination list authentication unit 18 of the terminal 10 may stop the display control unit 16 to display the destination list, and may delete destination list information and the terminal operational state information stored in the volatile storage unit 1002.

Further, the destination list authentication unit 18 of the terminal 10 may periodically acquire the position information through the position information acquiring unit 21 to manage a history of the position information. In this case, the destination list authentication unit 18 may delete the information indicating authentication success in the destination list request stored in the authentication result storage unit 24, may stop the display control unit 16 to display the destination list, and may delete the destination list information and the terminal operational state information stored in the volatile storage unit 1002 in a case where a distance between the position of the current position information and a position of previous position information exceeds a predetermined threshold.

Also, upon receiving the terminal ID of the request source terminal and the information indicating the authentication result in the destination list request included in the destination list request information in step S12-1 shown in Fig. 12, the state management unit 53 may record an information item indicating authentication failure in the destination list request in addition to the operational state of the terminal ID of the request source terminal in the terminal management DB 5003 (see Fig. 7) in a case where the received information indicates authentication failure. In this case, for example, the operational state "ONLINE (FAILURE)" is recorded associated with the terminal ID "01aa" of the request source terminal in the terminal management table shown in Fig. 7. Thus, the terminal ID "01aa" and the operational state "ONLINE (FAILURE)" of the request source terminal (terminal 10aa) that has requested the destination list can be transmitted in steps S37-1 and S37-2 shown in Fig. 9. Therefore, for example, when the terminal 10aa is rented to an external party and the authentication result in the destination list request is authentication failure, the user of the terminal 10db can be aware of the aforementioned state. Hence, an erroneous operation, performed by the user of the terminal 10db, for requesting a communication with the terminal 10aa can be prevented.

As for information regarding the current time, the destination list creation unit 54 may acquire the current time managed by the management system 50 upon receiving the destination list request information, or the current time may be acquired from the received destination list request information, where the request source terminal has obtained the current time to include in the destination list request information.

Also, the registration of destination in the destination list management table may be performed simply by the terminal 10. Or the terminal 10aa may be registered as a destination of the terminal 10ab and terminal 10ab may be registered as a destination of the terminal 10aa when the terminal 10ab approves a request for adding destination in response to receiving the request for adding destination including the terminal ID of the own terminal from the terminal 10aa.

The relay apparatus 30, the management system 50, the destination list setting apparatus 200, the program provision system 90 and the maintenance system 100 may be included in one computer or may be included in a plurality of computers separating their respective units (functions or means) to be arbitrarily disposed in the computers. Also, in a case where the program provision system 90 is included in one computer, the program transmitted from the program provision system 90 may be divided into a plurality of modules or may be not divided. Further, in a case where the program provision system 90 is included in a plurality of computers, the program may be transmitted from the computers being divided into a plurality of modules.

Also, the recording medium for storing the terminal program, the relay apparatus program and the transmission management program, HD204 for storing these programs, and the program provision system including the HD204 for storing these programs are used, as program products, for providing users, etc., the terminal program, the relay apparatus program and the transmission management program in Japan or a foreign country.

Although the description has been given where the television conference system is an example of the transmission system 1, this is not a limiting example. The transmission system 1 may be a telephone system including an IP (Internet Protocol) telephone system, an internet telephone system and the like. Also, a car navigation system may be the transmission system 1. In this case, one of the terminals 10 is corresponds to the car navigation system installed in a car while another terminal corresponds to a management terminal for managing the car navigation system in a management center or the car navigation system installed in another car.

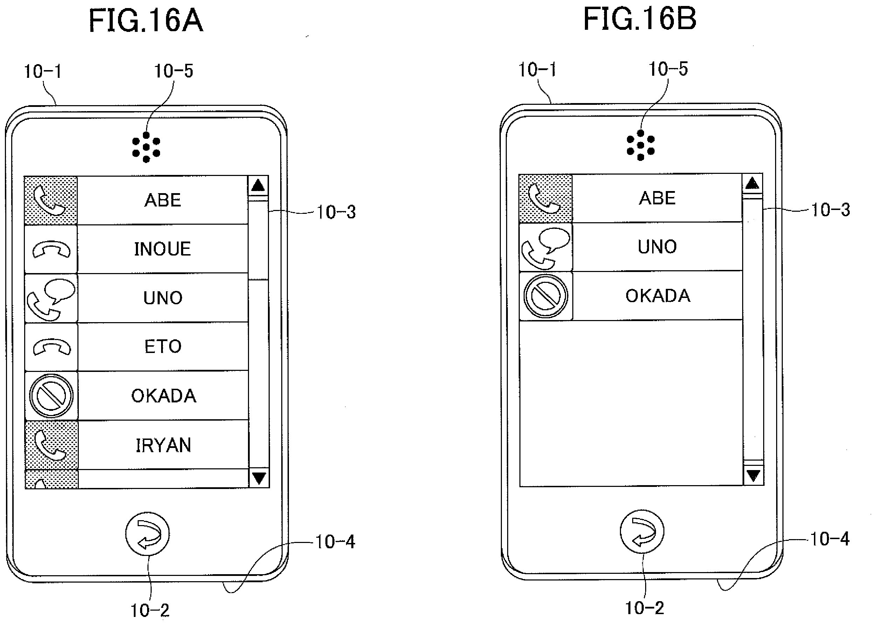

Further, the transmission system 1 may be a communication system of mobile telephones. In this case, for example, the terminal 10 corresponds to a mobile telephone. Examples of display of the destination list are shown in Fig. 16A and Fig. 16B. Fig. 16A is a diagram for illustrating an example display of the destination list in a case where the display of the destination list is not limited. Fig. 16B is a diagram for illustrating an example display of the destination list in a case where a part of the destination terminals are not allowed to be displayed due to limiting conditions.

The terminal 10 as the mobile telephone includes a main body 10-1, a menu screen display button 10-2 disposed on the main body 10-1, a display unit 10-3 disposed on the main body 10-1, a microphone 10-4 disposed in lower side of the main body 10-1, and a speaker 10-5 disposed in upper side of the main body 10-1. The menu screen display button 10-2 is a button for displaying a menu screen in which icons indicating respective applications are displayed. The display unit 10-3 is configured by a touch-screen, and a user can communicates with a mobile telephone of a counter party by selecting a destination displayed in the display unit 10-3.

Although, in the embodiments described above, the descriptions are given in a case where the television conference is held by the transmission system 1, this is not a limiting example. The transmission system 1 may be used for meetings, conversations between family members or friends, or one-way provision of information.

Herein above, although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A transmission system (1) comprising:
a terminal (10);
and a management system (50),
wherein the terminal (10) includes:
a transmission unit (11) configured to transmit terminal identification information and additional information to the management system (50), wherein the terminal identification information is used for identifying the terminal (10); and
a reception unit (11) configured to receive a destination list from the management system (50), wherein a terminal identification information item for identifying another terminal (10) is included in the destination list, the other terminal (10) being selected by the management system (50) as a communication destination of the terminal, and
wherein the management system (50) includes:
a reception unit (51) configured to receive the terminal identification information and the additional information from the terminal (10);
a destination list creation unit (54) configured to select the other terminal (10) as the communication destination of the terminal (10) to create the destination list including the terminal identification information item for identifying the selected other terminal (10); and
a transmission unit (51) configured to transmit the destination list to the terminal (10),
**characterized in that**:
the terminal (10) further includes:
an additional information acquiring unit (21) configured to acquire additional information indicating a state of the terminal (10);
the other terminal (10) is selected by the management system (50) as a communication destination of the terminal based on the terminal identification information of the terminal (10) and the additional information;
the destination list creation unit (54) selects the other terminal (10) as the communication destination of the terminal (10) based on the terminal identification information of the terminal (10) and the additional information;
the additional information includes an information item indicating authentication result, the authentication having been performed by the terminal (10);
the management system (50) further includes:
a destination list management table comprising a terminal identification information of the terminal (10), a terminal identification information of the other terminal (10), and an authentication limiting information,
wherein the destination list creation unit (54) adds the other terminal (10) as the communication destination of the terminal (10) to the destination list when the other terminal (10) is associated with the terminal (10) in the destination list management table and when the condition stored in the authentication limiting information is not set or when the authentication result of the terminal is successful and the authentication limiting information is set;
wherein the authentication limiting information is set by the other terminal (10) in the destination list management table.

2. The transmission system (1) as claimed in claim 1, wherein
the additional information includes an information item indicating a current position of the terminal (10).

3. The transmission system (1) as claimed in claim 1 or 2, wherein
the destination list creation unit (54) selects the other terminal as the destination in accordance with the terminal (10) identification information of the terminal (10), the additional information, and the current time.

4. The transmission system (1) as claimed in claim 1, wherein
the terminal (10) further comprising:
an authentication unit configured to authenticate a user; and
an authentication result storage unit (24) configured to store authentication result information indicating a result of the authentication performed by the authentication unit; wherein
the additional information includes the authentication result information stored in the authentication result storage unit (24).

5. The transmission system (1) as claimed in any one of claims 1 to 4, wherein
the management system (50) further comprising:
a terminal management unit configured to record destination lists corresponding to respective terminals (10) included in the transmission system (1), the recorded destination lists being associated with terminal identification information items of the respective terminals (10); and
a state management unit (53) configured to transmit the terminal identification information for identifying the first terminal (10) and a notification to a second terminal (10), wherein a destination list of the destination lists associated with the terminal identification information of the second terminal (10) includes the terminal identification information of the first terminal (10) as the communication destination of the second terminal(10), and the notification indicates that the terminal identification information item of at least one of terminals (10) included in the transmission system is prevented from being selected as the communication destination of the first terminal (10) due to the additional information of the first terminal(10).

6. A management system (50) included in the transmission system (1) as claimed in claim 1.

7. A terminal (10) included in the transmission system (1) as claimed in claim 1.

8. A method of transmission performed by a transmission system (1) including a terminal (10) and a management system (50), the method comprising:
acquiring, by the terminal (10), additional information indicating a state of the terminal (10);
transmitting, by the terminal (10), terminal identification information and the additional information to the management system (50), wherein the terminal identification information is used for identifying the terminal (10);
receiving, by the management system (50), the terminal identification information and the additional information from the terminal (10);
selecting, by the management system (50), another terminal (10) as a communication destination of the terminal based on the terminal identification information of the terminal (10) and the additional information to create a destination list including a terminal (10) identification information item for identifying the selected other terminal(10);
transmitting, by the management system (50), the destination list to the terminal (10);
receiving, by the terminal (10), the destination list from the management system (50), wherein the terminal identification information item for identifying the other terminal (10) is included in the destination list, the other terminal (10) being selected by the management system (50) as the communication destination of the terminal (10) based on the terminal identification information of the terminal (10) and the additional information,
wherein the additional information includes an information item indicating authentication result, the authentication having been performed by the terminal (10);
providing a destination list management table in the management system (50), comprising a terminal identification information of the terminal (10), a terminal identification information of the other terminal (10), and an authentication limiting information; and
adding the other terminal (10) as the communication destination of the terminal (10) to the destination list when the other terminal (10) is associated with the terminal (10) in the destination list management table and when the condition stored in the authentication limiting information is not set or when the authentication result of the terminal is successful and the authentication limiting information is set;
wherein the authentication limiting information is set by the other terminal (10) in the destination list management table.

9. A non-transitory computer-readable recording medium having stored therein a program for causing a computer to serve as the terminal (10) as claimed in claim 7.

10. A non-transitory computer-readable recording medium having stored therein a program for causing a computer to serve as the management system (50) as claimed in claim 6.

## Patentansprüche

1. Übertragungssystem (1), das umfasst:
ein Endgerät (10);
und ein Managementsystem (50),
wobei das Endgerät (10) enthält:
eine Sendeeinheit (11), die konfiguriert ist, Endgerätidentifikationsinformationen und zusätzliche Informationen an das Managementsystem (50) zu senden, wobei die Endgerätidentifikationsinformationen zum Identifizieren des Endgeräts (10) verwendet werden; und
eine Empfangseinheit (11), die konfiguriert ist, eine Bestimmungsliste von dem Managementsystem (50) zu empfangen, wobei ein Endgerätidentifikationsinformationselement zum Identifizieren eines anderen Endgeräts (10) in der Bestimmungsliste enthalten ist, wobei das andere Endgerät (10) durch das Managementsystem (50) als eine Kommunikationsbestimmung des Endgeräts ausgewählt ist, und
wobei das Managementsystem (50) enthält:
eine Empfangseinheit (51), die konfiguriert ist, die Endgerätidentifikationsinformationen und die zusätzlichen Informationen von dem Endgerät (10) zu empfangen;
eine Bestimmungslistenerzeugungseinheit (54), die konfiguriert ist, das andere Endgerät (10) als die Kommunikationsbestimmung des Endgeräts (10) auszuwählen, um die Bestimmungsliste zu erzeugen, die das Endgerätidentifikationsinformationselement zum Identifizieren des ausgewählten anderen Endgeräts (10) enthält; und
eine Sendeeinheit (51), die konfiguriert ist, die Bestimmungsliste an das Endgerät (10) zu senden,
**dadurch gekennzeichnet, dass**:
das Endgerät (10) ferner enthält:
eine Einheit zum Erfassen von zusätzlichen Informationen (21), die konfiguriert ist, zusätzliche Informationen zu erfassen, die einen Zustand des Endgeräts (10) angeben;
wobei das andere Endgerät (10) durch das Managementsystem (50) anhand der Endgerätidentifikationsinformationen des Endgeräts (10) und der zusätzlichen Informationen als eine Kommunikationsbestimmung des Endgeräts ausgewählt wird;
wobei die Bestimmungslistenerzeugungseinheit (54) das andere Endgerät (10) anhand der Endgerätidentifikationsinformationen des Endgeräts (10) und der zusätzlichen Informationen als die Kommunikationsbestimmung des Endgeräts (10) auswählt;
wobei die zusätzlichen Informationen ein Informationselement enthalten, das das Authentifizierungsergebnis angibt, wobei die Authentifizierung durch das Endgerät (10) ausgeführt wurde;
wobei das Managementsystem (50) ferner enthält:
eine Bestimmungslistenmanagementtabelle, die Endgerätidentifikationsinformationen des Endgeräts (10), Endgerätidentifikationsinformationen des anderen Endgeräts (10) und Authentifizierungsbegrenzungsinformationen umfasst,
wobei die Bestimmungslistenerzeugungseinheit (54) das andere Endgerät (10) als eine Kommunikationsbestimmung des Endgeräts (10) zu der Bestimmungsliste hinzufügt, wenn das andere Endgerät (10) dem Endgerät (10) in der Bestimmungslistenmanagementtabelle zugeordnet ist und wenn die in den Authentifizierungsbegrenzungsinformationen gespeicherte Bedingung nicht eingestellt ist oder wenn das Authentifizierungsergebnis des Endgeräts erfolgreich ist und die Authentifizierungsbegrenzungsinformationen eingestellt sind;
wobei die Authentifizierungsbegrenzungsinformationen durch das andere Endgerät (10) in der Bestimmungslistenmanagementtabelle eingestellt werden.

2. Übertragungssystem (1) nach Anspruch 1, wobei
die zusätzlichen Informationen ein Informationselement enthalten, das eine derzeitige Position des Endgeräts (10) angibt.

3. Übertragungssystem (1) nach Anspruch 1 oder 2, wobei
die Bestimmungslistenerzeugungseinheit (54) das andere Endgerät in Übereinstimmung mit den Endgerätidentifikationsinformationen des Endgeräts (10), der zusätzlichen Informationen und der aktuellen Zeit als die Bestimmung auswählt.

4. Übertragungssystem (1) nach Anspruch 1, wobei
das Endgerät (10) ferner umfasst:
eine Authentifizierungseinheit, die konfiguriert ist, einen Anwender zu authentifizieren; und
eine Authentifizierungsergebnisspeichereinheit (24), die konfiguriert ist, Authentifizierungsergebnisinformationen, die ein Ergebnis der durch die Authentifizierungseinheit ausgeführten Authentifizierung angeben, zu speichern; wobei
die zusätzlichen Informationen die in der Authentifizierungsergebnisspeichereinheit (24) gespeicherten Authentifizierungsergebnisinformationen enthalten.

5. Übertragungssystem (1) nach einem der Ansprüche 1 bis 4, wobei das Managementsystem (50) ferner umfasst:
eine Endgerätmanagementeinheit, die konfiguriert ist, Bestimmungslisten aufzuzeichnen, die jeweiligen Endgeräten (10) entsprechen, die in dem Übertragungssystem (1) enthalten sind, wobei die aufgezeichneten Bestimmungslisten den Endgerätidentifikationsinformationselementen der jeweiligen Endgeräte (10) zugeordnet sind; und
eine Zustandsmanagementeinheit (53), die konfiguriert ist, die Endgerätidentifikationsinformationen zum Identifizieren des ersten Endgeräts (10) und eine Benachrichtigung an ein zweites Endgerät (10) zu senden, wobei eine Bestimmungsliste der Bestimmungslisten, die den Endgerätidentifikationsinformationen des zweiten Endgeräts (10) zugeordnet ist, die Endgerätidentifikationsinformationen des ersten Endgeräts (10) als die Kommunikationsbestimmung des zweiten Endgeräts (10) enthält, und die Benachrichtigung angibt, dass aufgrund der zusätzlichen Informationen des ersten Endgeräts (10) verhindert wird, dass das Endgerätidentifikationsinformationselement mindestens eines Endgeräts (10), das in dem Übertragungssystem enthalten ist, als die Kommunikationsbestimmung des ersten Endgeräts (10) ausgewählt wird.

6. Managementsystem (50), das in dem Übertragungssystem (1) nach Anspruch 1 enthalten ist.

7. Endgerät (10), das in dem Übertragungssystem (1) nach Anspruch 1, enthalten ist.

8. Übertragungsverfahren, das durch ein Übertragungssystem (1) ausgeführt wird, das ein Endgerät (10) und ein Managementsystem (50) enthält, wobei das Verfahren umfasst:
Erfassen durch das Endgerät (10) von zusätzlichen Informationen, die einen Zustand des Endgeräts (10) angeben;
Senden durch das Endgerät (10) von Endgerätidentifikationsinformationen und der zusätzlichen Informationen an das Managementsystem (50), wobei die Endgerätidentifikationsinformationen zum Identifizieren des Endgeräts (10) verwendet werden;
Empfangen durch das Managementsystem (50) der Endgerätidentifikationsinformationen und der zusätzlichen Informationen von dem Endgerät (10);
Auswählen durch das Managementsystem (50) eines anderen Endgeräts (10) als eine Kommunikationsbestimmung des Endgeräts anhand der Endgerätidentifikationsinformationen des Endgeräts (10) und der zusätzlichen Informationen, um eine Bestimmungsliste zu erzeugen, die ein Endgerätidentifikationsinformationselement zum Identifizieren des ausgewählten anderen Endgeräts (10) enthält;
Senden durch das Managementsystem (50) der Bestimmungsliste an das Endgerät (10);
Empfangen durch das Endgerät (10) der Bestimmungsliste von dem Managementsystem (50), wobei das Endgerätidentifikationsinformationselement zum Identifizieren des anderen Endgeräts (10) in der Bestimmungsliste enthalten ist, wobei das andere Endgerät (10) durch das Managementsystem (50) anhand der Endgerätidentifikationsinformationen des Endgeräts (10) und der zusätzlichen Informationen als die Kommunikationsbestimmung des Endgeräts (10) ausgewählt ist,
wobei die zusätzlichen Informationen ein Informationselement enthalten, das ein Authentifizierungsergebnis angibt, wobei die Authentifizierung durch das Endgerät (10) ausgeführt wurde;
Bereitstellen einer Bestimmungslistenmanagementtabelle in dem Managementsystem (50), die Endgerätidentifikationsinformationen des Endgeräts (10), Endgerätidentifikationsinformationen des anderen Endgeräts (10) und Authentifizierungsbegrenzungsinformationen umfasst; und
Hinzufügen des anderen Endgeräts (10) als die Kommunikationsbestimmung des Endgeräts zu der Bestimmungsliste, wenn das andere Endgerät (10) dem Endgerät (10) in der Bestimmungslistenmanagementtabelle zugeordnet wird und wenn die in den Authentifizierungsbegrenzungsinformationen gespeicherte Bedingung nicht eingestellt ist oder wenn das Authentifizierungsergebnis des Endgeräts erfolgreich ist und die Authentifizierungsbegrenzungsinformationen eingestellt sind;
wobei die Authentifizierungsbegrenzungsinformationen durch das andere Endgerät (10) in der Bestimmungslistenmanagementtabelle eingestellt werden.

9. Nichtflüchtiges computerlesbares Aufzeichnungsmedium mit einem in ihm gespeicherten Programm, um zu bewirken, dass ein Computer als das Endgerät (10) nach Anspruch 7 dient.

10. Nichtflüchtiges computerlesbares Aufzeichnungsmedium mit einem in ihm gespeicherten Programm, um zu bewirken, dass ein Computer als das Managementsystem (50) nach Anspruch 6 dient.

## Revendications

1. Système de transmission (1) comprenant :
un terminal (10) ;
et un système de gestion (50),
où le terminal (10) inclut :
une unité de transmission (11) configurée pour transmettre une information d'identification de terminal et une information supplémentaire au système de gestion (50), où l'information d'identification de terminal est utilisée pour identifier le terminal (10) ; et
une unité de réception (11) configurée pour recevoir une liste de destinataires en provenance du système de gestion (50), où un élément d'information d'identification de terminal pour identifier un autre terminal (10) est inclut dans la liste de destinataires, l'autre terminal (10) étant sélectionné par le système de gestion (50) en tant que destinataire de communication du terminal, et
où le système de gestion (50) inclut :
une unité de réception (51) configurée pour recevoir l'information d'identification de terminal et l'information supplémentaire en provenance du terminal (10) ;
une unité de création de liste de destinataires (54) configurée pour sélectionner l'autre terminal (10) en tant que destinataire de communication du terminal (10) pour créer la liste de destinataires incluant l'élément d'information d'identification de terminal pour identifier l'autre terminal (10) sélectionné ; et
une unité de transmission (51) configurée pour transmettre la liste de destinataires au terminal (10),
**caractérisé en ce que**
le terminal (10) inclut en outre :
une unité d'acquisition d'information supplémentaire (21) configurée pour acquérir une information supplémentaire indiquant un état du terminal (10) ;
l'autre terminal (10) est sélectionné par le système de gestion (50) en tant que destinataire de communication du terminal en se fondant sur l'information d'identification de terminal du terminal (10) et l'information supplémentaire ;
l'unité de création de liste de destinataires (54) sélectionne l'autre terminal (10) en tant que destinataire de communication du terminal (10) en se fondant sur l'information d'identification de terminal du terminal (10) et l'information supplémentaire ;
l'information supplémentaire inclut un élément d'information indiquant un résultat d'authentification, l'authentification ayant été réalisée par le terminal (10) ;
le système de gestion (50) inclut en outre :
un tableau de gestion de liste de destinataires comprenant une information d'identification de terminal du terminal (10), une information d'identification de terminal de l'autre terminal (10) et une information de limitation d'authentification,
où l'unité de création de liste de destinataires (54) ajoute l'autre terminal (10) en tant que destinataire de communication du terminal (10) à la liste de destinataires quand l'autre terminal (10) est associé au terminal (10) dans le tableau de gestion de liste de destinataires et quand la condition stockée dans l'information de limitation d'authentification n'est pas établie ou quand l'authentification du terminal a réussi et l'information de limitation d'authentification est établie ;
où l'information de limitation d'authentification est établie par l'autre terminal (10) dans le tableau de gestion de liste de destinataires.

2. Système de transmission (1) selon la revendication 1, où l'information supplémentaire inclut un élément d'information indiquant une position actuelle du terminal (10).

3. Système de transmission (1) selon la revendication 1 ou 2, où l'unité de création de liste de destinataires (54) sélectionne l'autre terminal en tant que destinataire conformément à l'information d'identification de terminal (10) du terminal (10), l'information supplémentaire et l'heure actuelle.

4. Système de transmission (1) selon la revendication 1, où le terminal (10) comprend en outre :
une unité d'authentification configurée pour authentifier un utilisateur ; et
une unité de stockage de résultat d'authentification (24) configurée pour stocker une information de résultat d'authentification indiquant un résultat de l'authentification effectuée par l'unité d'authentification ; où
l'information supplémentaire inclut une information de résultat d'authentification stockée dans l'unité de stockage de résultat d'authentification (24).

5. Système de transmission (1) selon l'une quelconque des revendications 1 à 4, où
le système de gestion (50) comprend en outre :
une unité de gestion de terminal configurée pour enregistrer des listes de destinataires correspondant à des terminaux respectifs (10) inclus dans le système de transmission (1), les listes de destinataires enregistrées étant associées à des éléments d'information d'identification de terminal des terminaux respectifs (10) ; et
une unité de gestion d'état (53) configurée pour transmettre l'information d'identification de terminal pour identifier le premier terminal (10) et une notification à un second terminal (10), où une liste de destinataires parmi les listes de destinataires associées à l'information d'identification de terminal du second terminal (10) inclut l'information d'identification de terminal du premier terminal (10) en tant que destinataire de communication du second terminal (10), et la notification indique que la sélection de l'élément d'information d'identification de terminal d'au moins un des terminaux (10) inclus dans le système de transmission en tant que destinataires de communication du premier terminal (10) est empêchée en raison de l'information supplémentaire du premier terminal (10).

6. Système de gestion (50) inclus dans le système de transmission (1) selon la revendication 1.

7. Terminal (10) inclut dans le système de transmission (1) selon la revendication 1.

8. Procédé de transmission mis en oeuvre par un système de transmission (1) incluant un terminal (10) et un système de gestion (50), le procédé comprenant :
l'acquisition par le terminal (10) d'une information supplémentaire indiquant un état du terminal (10) ;
la transmission par le terminal (10) d'une information d'identification de terminal et de l'information supplémentaire au système de gestion (50), où l'information d'identification de terminal est utilisée pour identifier le terminal (10) ;
la réception par le système de gestion (50) de l'information d'identification de terminal et de l'information supplémentaire en provenance du terminal (10) ;
la sélection par le système de gestion (50) d'un autre terminal (10) en tant que destinataire de communication du terminal en se fondant sur l'information d'identification de terminal du terminal (10) et l'information supplémentaire pour créer une liste de destinataires incluant un élément d'information d'identification de terminal (10) pour identifier l'autre terminal (10) sélectionné ; et
la transmission par le système de gestion (50) de la liste de destinataires au terminal (10) ;
la réception par le terminal (10) de la liste de destinataires en provenance du système de gestion (50), où un élément d'information d'identification de terminal pour identifier l'autre terminal (10) est inclus dans la liste de destinataires, l'autre terminal (10) étant sélectionné par le système de gestion (50) en tant que destinataire de communication du terminal (10) en se fondant sur l'information d'identification de terminal (10) et l'information supplémentaire,
où l'information supplémentaire inclut un élément d'information indiquant un résultat d'authentification, l'authentification ayant été réalisée par le terminal (10) ;
la mise à disposition d'un tableau de gestion de liste de destinataires dans le système de gestion (10), comprenant une information d'identification de terminal du terminal (10), une information d'identification de terminal de l'autre terminal (10) et une information de limitation d'authentification ; et
l'ajout de l'autre terminal (10) en tant que destinataire de communication du terminal (10) à la liste de destinataires quand l'autre terminal (10) est associé au terminal (10) dans le tableau de gestion de liste de destinataires et quand la condition stockée dans l'information de limitation d'authentification n'est pas établie ou quand l'authentification du terminal a réussi et l'information de limitation d'authentification est établie ;
où l'information de limitation d'authentification est établie par l'autre terminal (10) dans le tableau de gestion de liste de destinataires.

9. Support d'enregistrement non transitoire lisible par ordinateur dans lequel est stocké un programme par lequel un ordinateur sert de terminal (10) selon la revendication 7.

10. Support d'enregistrement non transitoire lisible par ordinateur dans lequel est stocké un programme par lequel un ordinateur sert de système de gestion (50) selon la revendication 6.
